# FASCICULE DE BREVET EUROPEEN

(11) **EP 1 091 155 B1**
(45) Date de publication et mention de la délivrance du brevet: **19.07.2006**
(21) Numéro de dépôt: 99403312.4
(22) Date de dépôt: 29.12.1999
(51) Int. Cl.: F16L 11/12, F16L 11/16, F16L 55/033

(54) **Dispositif de contrôle de la porosité d'un tuyau acoustique flexible conducteur d'air**
Vorrichtung zum Prüfen von Porosität eines akustischen Rohres um Luft zu fördern
Porosity inspection device for an acoustical hose conducting air

(30) Priorité: 20.04.1999 BR 9900914
(43) Date de publication de la demande: 11.04.2001
(73) Titulaire: Westaflex Tubos Flexiveis Ltda., Araucaria, Parana 702-210, CEP 83 (BR)
(72) Inventeur: Lepoutre, Edmond Pol Jean, Parque Barigui Curitiba (BR)
(74) Mandataire: Thévenet, Jean-Bruno

(56) Documents cités:
- EP-A- 0 665 404
- EP-A- 0 940 621
- DE-U- 9 015 414
- US-A- 2 089 492

## Description

### Domaine de la technique

La présente invention concerne un dispositif de contrôle de la porosité d'un tuyau acoustique flexible conducteur d'air dont les parois sont constituées par des bandes hélicoïdales de matières poreuses, et un tuyau acoustique flexible.

### Art antérieur

II est connu des techniciens spécialisés que le phénomène d'atténuation acoustique dans un tube aux parois poreuses est dû à l'absorption des ondes sonores, propagées par l'air circulant à l'intérieur du tube, par les parois de ce tube qui constituent un piège et les transforment en chaleur. Ainsi, en contrôlant la porosité des parois du tube, on contrôle ses caractéristiques d'atténuation acoustique.

Actuellement, il existe des tuyaux flexibles conducteurs d'air utilisés dans diverses industries, parmi lesquelles l'industrie automobile, qui sont fabriqués à partir du tressage ou tissage de fils sur un support métallique ou non, et l'on souligne que lesdits tuyaux flexibles - étant donné leur constitution - évitent la propagation excessive des bruits mécaniques par exemple, le tuyau selon EP-A-0 665 404. Cependant, le processus de fabrication de ces tuyaux flexibles est assez long, ce qui entraîne une augmentation des coûts en obligeant le fabricant à mettre en place plusieurs traitements de ces produits visant à obtenir le façonnage souhaité. Il y a également un processus similaire de fabrication où l'on effectue la superposition et le collage de bandes de matières poreuses sur un support hélicoïdal de fils métalliques ou non. Les qualités acoustiques des tuyaux susmentionnés sont obtenus par l'application d'un vernis ou d'un autre produit similaire sur ces tuyaux, entraînant l'obstruction extérieure et partielle des porosités issues du façonnage de ces tuyaux.

On connaît également des tuyaux flexibles conducteurs d'air dont le processus de fabrication comprend la superposition hélicoïdale de bandes uniformes, ondulées ou non, de différentes matières, lesquelles peuvent être collées ou thermocollées les unes aux autres, ces bandes uniformes étant confectionnées en matière métallique, en matière plastique ou en matière fibreuse composée. Le processus de fabrication de ces tuyaux flexibles est rapide et leurs qualités quant à la résistance et à l'étanchéité dépendent de la superposition hélicoïdale des bandes uniformes. Pourtant, ces types de tuyau permettent une propagation excessive de bruits mécaniques. Quelques-uns de ces tuyaux sont fabriqués à partir de bandes poreuses, en matières tissées telles que le coton, en tissus non tissés, tels que le polyester non tissé, ou encore en papier poreux généralement destiné à la fabrication de filtres. Ces bandes poreuses, encollées sur une bande trouée, métallique ou non, utilisée en guise de support, apportent un effet d'atténuation acoustique. Le contrôle acoustique de ces tuyaux est déterminé par la taille des trous du support décrit ci-dessus, ainsi que par la composition des bandes poreuses.

Les méthodes de fabrication de tuyaux acoustiques susmentionnées souffrent toutefois d'un grave inconvénient en ce que le procédé d'ajustement de leurs qualités acoustiques s'avère particulièrement difficile à mettre en oeuvre. En effet, pour les premiers tuyaux décrits, le contrôle précis de l'application régulière du vernis, ou d'un produit similaire, est assez délicat. De même, pour les seconds, il est très difficile de déterminer les dimensions exactes des trous dans le support, du fait que, en fonction de l'effet acoustique souhaité, il faut étalonner et changer constamment les outils employés pour réaliser ces trous de calibrage.

### Objet et définition de l'invention

Le dispositif de contrôle de la porosité d'un tuyau acoustique flexible conducteur d'air, qui fait l'objet de la présente demande, a pour objet de pallier ces inconvénients.

Le dispositif proposé se compose d'un film non poreux d'une largeur prédéterminée intercalé tout au long du tuyau entre la couche poreuse de revêtement extérieur et la couche poreuse de revêtement intérieur de ce tuyau, et disposé de manière hélicoïdale sans recouvrement, de façon à laisser entre ses hélices un espace prédéterminé formant une zone poreuse.

Par cette construction, un contrôle précis du positionnement du film non poreux détermine sur les parois du tuyau des zones poreuses et non poreuses spiralées rendant possible une parfaite répétition des caractéristiques acoustiques lors de la fabrication du tuyau, ce qui facilite énormément leur fabrication en série.

Selon le mode de fabrication envisagé, le film non poreux peut être autocollant, simplement collé, thermocollé ou non, moulé ou non directement sur l'une ou l'autre ou les deux couches de revêtement constituant des parois du tuyau.

Avantageusement, le film non poreux est formé par un film de polypropylène.

### Brève description des dessins

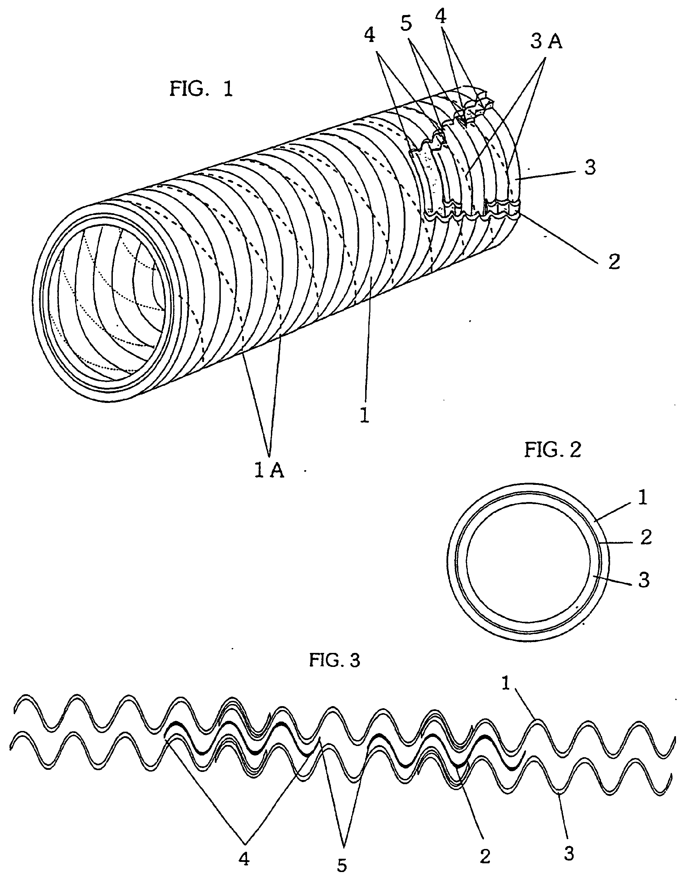

D'autres avantages de la présente invention pourront être mieux compris à l'aide des dessins ci-joint sur lesquels:
. la figure 1 montre en perspective éclatée un tuyau acoustique cylindrique, hélicoïdal et flexible, conducteur d'air, comportant le dispositif selon l'invention,
. la figure 2 est une vue en section droite du tuyau représenté sur la figure 1, et
. la figure 3 est une vue en coupe longitudinale d'une partie de la paroi du tuyau représenté sur la figure 1.

### Description détaillée d'un mode particulier de réalisation

La présente invention trouve application essentiellement dans les tubes poreux utilisés comme atténuateurs sélectifs de bruits. Ces tubes n'assourdissent que certaines fréquences de bruits particulièrement désagréables et laisse filtrer certaines ondes sonores et une partie de l'air à l'extérieur et/ou à l'intérieur des parois les constituant. Surtout, elle concerne des tubes souples parfaitement flexibles et donc susceptibles de présenter une forme onduleuse. Classiquement, ces tubes en général cylindriques sont formés par la superposition d'au moins deux couches poreuses, une première couche de revêtement extérieur, constituée par une bande hélicoïdale de matière poreuse, et une seconde couche de revêtement intérieur, de diamètre inférieur et constituée également par une bande hélicoïdale de matière poreuse.

Selon l'invention, et comme illustré sur les figures 1, 2 et 3, le dispositif permettant le contrôle de la porosité d'un tuyau acoustique flexible est constitué par un film non poreux (2) intercalé entre la couche ou le revêtement cylindrique extérieur (1), lequel comme mentionné précédemment est constitué par une bande hélicoïdale de matière poreuse (1A), et la couche ou le revêtement cylindrique intérieur (3), de diamètre inférieur et constitué également par une bande hélicoïdale de matière poreuse (3A). Ce film non poreux de largeur variable mais prédéterminée, présente une disposition hélicoïdale sans recouvrement qui détermine entre les parois et tout le long du tuyau une succession déterminée de zones spiralées non poreuses (4) et poreuses (5) dont l'interaction permet l'atténuation de fréquences sonores préétablies et, par conséquent, la suppression des bruits indésirables.

Le film non poreux (2) peut être thermocollé ou non, moulé ou non directement sur l'une ou l'autre ou les deux bandes poreuses qui constituent les parois du tuyau. La distance (largeur de la zone poreuse spiralée) entre les hélices de la bande du film non poreux (2) ainsi que la largeur de cette bande de film (2), permettent le contrôle précis de la porosité du tuyau.

Le dispositif permettant le contrôle de la porosité objet de la présente demande a été conçu principalement dans le but de répondre aux exigences techniques d'atténuation des bruits lors de la conduction de l'air dans des tuyaux acoustiques flexibles utilisés essentiellement pour l'admission d'air dans les moteurs à combustion interne. Plus particulièrement, dans l'industrie automobile, les techniciens de motorisation ont déterminés les fréquences à supprimer afin d'atténuer les bruits d'admission d'air de second, quatrième et sixième ordre, qui correspondent aux bandes des bruits désagréables et qui empêchent la réalisation d'un confort acoustique dans l'habitacle du véhicule.

Des essais ont été effectués avec deux tuyaux ayant le même diamètre de 63.5 mm et la même longueur de 500 mm, construits selon le procédé décrit précédemment et utilisant tous deux pour parois des bandes d'un même polyester non-tissé. Dans le premier tuyau, un film de polypropylène non poreux de largeur 50 mm et dont les hélices laissent entre elles une zone poreuse spiralée de 1 mm de largeur a été intercalé entre ses deux parois. Il en est résulté un gain acoustique en bruits dits de bouche de 25.4 dB(L) à 280 Hz et 20.6 dB(L) à 560 Hz. Dans le second tuyau, un même film de polypropylène non poreux dont les hélices laissent cette fois entre elles une zone poreuse spiralée de 3 mm de largeur a été intercalé entre les deux parois. Il en est alors résulté un gain acoustique en bruits de bouche de 45.7 dB(L) à 280 Hz et 40.2 dB(L) à 560 Hz.

Ainsi, il est permis d'affirmer que le dispositif proposé permet, par ses caractéristiques propres, la construction industrielle de tuyaux acoustiques flexibles utilisés pour l'admission d'air dans les moteurs à combustion interne, notamment dans le domaine de la construction automobile

## Revendications

1. Dispositif de contrôle de la porosité d'un tuyau acoustique flexible constitué par une couche de revêtement extérieur (1) formée par une bande hélicoïdale de matière poreuse (1A), et une couche de revêtement intérieur (3) de diamètre inférieur constituée également par une bande hélicoïdale de matière poreuse (3A), et utilisé pour la conduction de l'air, **caractérisé par le fait qu'**il est constitué par un film non poreux (2) d'une largeur prédéterminée, intercalé entre la couche poreuse de revêtement extérieur (1) et la couche poreuse de revêtement intérieur (3), et disposé de manière hélicoïdale sans recouvrement, de façon à laisser entre ses hélices un espace prédéterminé formant une zone poreuse (5).

2. Dispositif selon la revendication 1, **caractérisé par le fait que** le film non poreux (2) est autocollant, pouvant être collé, thermocollé ou non, moulé ou non directement sur l'une ou l'autre ou les deux couches de revêtement (1A, 3A) constituant des parois du tuyau.

3. Dispositif selon la revendication 2, **caractérisé en ce que** ledit film non poreux est formé par un film de polypropylène.

4. Tuyau acoustique flexible utilisé pour la conduction de l'air comportant :
- une couche de revêtement extérieur (1) formée par une bande hélicoïdale de matière poreuse (1A) ;
- une couche de revêtement intérieur (3) de diamètre inférieur constituée par une bande hélicoïdale de matière poreuse (3A) ; et
- un film non poreux (2) d'une largeur prédéterminée, intercalé entre la couche poreuse de revêtement extérieur (1) et la couche poreuse de revêtement intérieur (3), et disposé de manière hélicoïdale sans recouvrement, de façon à laisser entre ses hélices un espace prédéterminé formant une zone poreuse (5).

5. Tuyau selon la revendication 4, **caractérisé par le fait que** le film non poreux (2) est autocollant, pouvant être collé, thermocollé ou non, moulé ou non directement sur l'une ou l'autre ou les deux couches de revêtement (1A, 3A) constituant des parois du tuyau.

6. Tuyau selon la revendication 5, **caractérisé en ce que** ledit film non poreux est formé par un film de polypropylène.

7. Tuyau selon la revendication 4, **caractérisé en ce qu'**il est utilisé pour l'admission d'air dans les moteurs à combustion interne.

## Claims

1. Device for checking the porosity of a flexible acoustic pipe consisting of an outer cladding layer (1) formed by a helical strip of porous material (1A) and an inner cladding layer (3) of smaller diameter likewise consisting of a helical strip of porous material, (3A) and used for the conducting of air, **characterised in that** it consists of a non-porous film (2) of a predetermined width, interlaced with the outer porous cladding layer (1) and the interior porous cladding layer (3) and arranged in a helical manner without covering, in such a way as to leave between its spirals a predetermined space forming a porous zone (5).

2. Device according to Claim 1, **characterised in that** the non-porous film (2) is self-adherent, and can be bonded, hot-bonded or not, moulded or not, directly onto one or the other of the two cladding layers (1A, 3A) constituting walls of the pipe.

3. Device according to Claim 2, **characterised in that** said non-porous film is formed by a polypropylene film.

4. Flexible acoustic pipe used for the conducting of air, comprising:
- An outer cladding layer (1) formed by a helical strip of porous material (1A);
- An inner cladding layer (3) of smaller diameter formed by a helical strip of porous material (3A); and
- A non-porous film (2) of a predetermined width, interlaced with the outer porous cladding layer (1), and the inner porous cladding layer (3), and arranged in a helical manner without covering, in such a way as to leave between its spirals a predetermined space forming a porous zone (5).

5. Pipe according to Claim 4, **characterised in that** the non-porous film (2) is self-adherent, and can be bonded, hot-bonded or not, moulded or not, directly onto one or the other of the two cladding layers (1A, 3A) constituting walls of the pipe.

6. Pipe according to Claim 5, **characterised in that** said non-porous film is formed by a polypropylene film.

7. Pipe according to Claim 4, **characterised in that** it is used for the admission of air into internal combustion engines.

## Patentansprüche

1. Vorrichtung zur Kontrolle der Porosität einer flexiblen akustischen Röhre, bestehend aus einer Außenbedeckungsschicht (1), die aus einem schraubenförmigen Streifen aus porösem Material (1A) besteht, und einer Innenbedeckungsschicht (3) kleineren Durchmessers, die ebenso aus einem schraubenförmigen Streifen aus porösem Material (3A) besteht, und zur Luftleitung verwendet wird, **dadurch gekennzeichnet, dass** sie aus einem nicht-porösen Film (2) vorherbestimmter Breite besteht, der zwischen der porösen Außenbedeckungsschicht (1) und der porösen Innenbedeckungsschicht (3) eingeschoben ist und der in einer schraubförmigen Weise ohne Bedeckung so angeordnet ist, dass er zwischen seinen Schrauben einen vorherbestimmten Raum lässt, der einen porösen Bereich (5) bildet.

2. Vorrichtung nach Anspruch 1, **dadurch gekennzeichnet, dass** der nicht-poröse Film (2) selbsthaftend ist, wobei er geklebt, gegebenenfalls warmgeklebt, gegebenenfalls direkt auf der einen oder der anderen der beiden Bedeckungsschichten (1A, 3A) geformt werden kann, die die Wände der Röhre bildet.

3. Vorrichtung nach Anspruch 2, **dadurch gekennzeichnet, dass** der genannte nicht-poröse Film aus einem Polypropylenfilm besteht.

4. Flexible akustische Röhre, die zur Luftleitung benutzt wird, umfassend:
- eine Außenbedeckungsschicht (1), die aus einem schraubenförmigen Streifen aus porösem Material (1A) besteht,
- eine Innenbedeckungsschicht (3) kleineren Durchmessers, die aus einem schraubenförmigen Streifen aus porösem Material (3A) besteht,
- einen nicht-porösen Film (2) vorherbestimmter Breite, der zwischen der porösen Außenbedeckungsschicht (1) und der porösen Innenbedeckungsschicht (3) eingeschoben wird und der in einer schraubförmigen Weise so angeordnet ist, dass er zwischen seinen Schrauben einen vorherbestimmten Raum lässt, der einen porösen Bereich (5) bildet.

5. Röhre nach Anspruch 4, **dadurch gekennzeichnet, dass** der nicht-poröse Film (2) selbsthaftend ist, wobei er geklebt, gegebenenfalls warmgeklebt, gegebenenfalls direkt auf der einen oder der anderen der beiden Bedeckungsschichten (1A, 3A) geformt werden kann, die die Wände der Röhre bilden.

6. Röhre nach Anspruch 5, **dadurch gekennzeichnet, dass** der genannte nicht-poröse Film aus einem Polypropylenfilm besteht.

7. Röhre nach Anspruch 4, **dadurch gekennzeichnet, dass** sie zum Lufteinlass in Verbrennungsmotoren benutzt wird.
